Europäisches Patentamt

European Patent Office

Office européen des brevets

(19)

(11) Veröffentlichungsnummer: **0 185 011**
**B1**

(12) **EUROPÄISCHE PATENTSCHRIFT**

(45) Veröffentlichungstag der Patentschrift: **25.07.90**

(51) Int. Cl.⁵: **B 23 B 3/16,** B 23 B 3/06

(21) Anmeldenummer: **85890306.5**

(22) Anmeldetag: **10.12.85**

(54) **Werkzeugträger.**

(30) Priorität: **10.12.84 AT 3913/84**

(43) Veröffentlichungstag der Anmeldung:
**18.06.86 Patentblatt 86/25**

(45) Bekanntmachung des Hinweises auf die
Patenterteilung:
**25.07.90 Patentblatt 90/30**

(84) Benannte Vertragsstaaten:
**CH DE FR GB IT LI SE**

(56) Entgegenhaltungen:
**DE-A-1 602 902**
**DE-A-2 637 792**
**DE-A-3 244 084**
**DE-A-3 410 276**

**WERKSTATT UND BETRIEB, Band 111, Nr. 8,
August 1978, Seiten 501-504, München; W.
KALMBACH "CNC-Drehmaschine als
Bearbeitungszentrum"**

(73) Patentinhaber: **MASCHINENFABRIK HEID
AKTIENGESELLSCHAFT
Ernstbrunner Strasse 31-33
A-2000 Stockerau (AT)**

(72) Erfinder: **Steiner, Karl
Neulerchenfelderstrasse 11/9
A-1160 Wien (AT)**

(74) Vertreter: **Müllner, Erwin, Dr. et al
Patentanwälte Dr. Erwin Müllner Dipl.-Ing.
Werner Katschinka Postfach 159 Weihburggasse
9
A-1010 Wien (AT)**

(56) Entgegenhaltungen:
**V.D.I.-ZEITSCHRIFT, Band 125, Nr. 22,
November 1983, Seiten 107-111, Düsseldorf; E.
KELLERHALS et al.: "Komplettbearbeitung auf
CNC-Drehmaschinen mit angetriebenen
Werkzeugen"**

(56) Entgegenhaltungen:
   WERKSTATT UND BETRIEB, Band 117, Nr. 8,
   August 1984, Seiten 493-498, München; M.
   HEKELER "Komplettbearbeitung auf CNC-
   Drehmaschinen durch angetriebene
   Werkzeuge"

   V.D.I.-ZEITSCHRIFT, Band 125, Nr. 8, April 1983,
   Seiten 283-286, Düsseldorf; M. SCHULER
   "Möglichkeiten des Einsatzes von
   Messeinrichtungen an CNC-Drehmaschinen"

**Beschreibung**

Die Erfindung betrifft eine Werkzeugmaschine mit einem Werkzeugträger, der einen Schwenkteil und einen Spannkopf umfaßt und der um zwei Achsen auf einem Schieber, beispielsweise einem Planschieber, drehbar ist, wobei die Achsen vorzugsweise in einem rechten Winkel zueinander stehen und die eine Achse (A-Achse) parallel zur Planvorschubrichtung (x) und die andere Achse (B-Achse) in der normal dazu stehenden Richtung (8) ausgerichtet sind, siehe Werkstatt und Detrieb, Band 111, Nr. 8, August 1978, München.

Sogenannte flexible Bearbeitungszentren verfügen über Steuerungen, die für verschiedenste Werstücke programmierbar sind und sich auf die Bearbeitung in Abhängigkeit vom zugeführten Werkstück selbsttätig einstellen. Bearbeitungszentren dieser Art sind beispielsweise als Schrägbettmaschinen mit Werkstück- und Werkzeugwechseleinrichtung. Magazinen und mit einer Programmsteuerung ausgebildet. Bearbeitungsvorgänge, die auf eine einzeige Maschine konzentriert sind und im mehreren Achsenrichtungen spanabhebend erfolgen, erfordern einen Werkzeugträger, der diesen Aufgaben gerecht wird. Bei Werkzeugmaschinen sind zusätzlich zu den klassischen Bearbeitungsrichtungen, die infolge von Plan- und Längsvorschub als x- und z-Richtungen gekennzeichnet werden, noch Bearbeitungen in der auf die x/z-Ebene normal stehenden y-Richtung geläufig-Dazu verfügt eine als Bearbeitungszentrum ausgebildete CNC-Drehmaschine über zwei Drehachsen für den Werkzeugträger und zusätzlich über einen vertikalen Schlitten zur Erzielung einer y-Achse für diese Bearbeitungsrichtung (Werkstatt und Betrieb, Band 111, Nr. 8, August 1978, München).

Die Erfindung zielt darauf ab, ein solches zusätzliches Schlittensystem zu vermeiden und dennoch eine Bearbeitung in y-Richtung zu ermöglichen.

Dies wird bei einer Werkzeugmaschine der eingangs beschriebenen Art dadurch erreicht, daß Mittel zur programmierbaren Steuerung der Drehlage des Werkzeugträgers während der Bearbeitung um eine oder beiden Achsen, zusätzlich zu einem Längs- und bzw. oder Planvorschub zwecks Bearbeitung eines Werkstückes in der auf die Längs(z)- und Plan(x)-Richtung normal stehenden y-Richtung und/oder schräg dazu Vorgesehen sind.

Bei einer speziellen Ausführungsform sind mindestens zwei Werkzeugaufnahmen vorgesehen, wobei die eine für stationäre Drehwerkzeuge und die andere für rotierend angetriebene Werkzeuge ausgebildet ist. Eine konkrete Ausführung, die den programmierbaren Werkzeugeinsatz mit einer y-Koordinate in vorteilhafter Weise möglich macht, umfaßt zum Verschwenken des Werkzeugträgers in eine Position außerhalb der Maschinenlängs-(z)-oder Planachse (x) eine digitale Positioniereinrichtung mit Indexierung z.B. über Planverzahnung. Dadurch können die Schnittkräfte der Werkzeuge in jeder beliebigen Lage sehr gut aufgenommen werden. Abgesehen von einer Positionierung des Werkzeuges für eine Bearbeitung kann damit auch das Verschwenken während der Bearbeitung erfolgen. Dazu ist in zweckmäßiger Weise eine stufenlose interpoliereinrichtung für den Spannkopf und/oder dem Schwenkteil vorgesehen.

Eine Bearbeitung in Richtung der y-Achse kann auch dann erfolgen, wenn kein Schlitten für einen y-Vorschub zur Verfügung steht. Diese Realisierbarkeit einer y-Achse unter Schnitt (während der Bearbeitung) wird durch Zusammenwirken der parallel zur Planschieberaufspannfläche liegenden A-Achse und der Achsen x (Planvorschub) und z (Längsvorschub) ermöglicht. Zur unmittelbaren Kontrolle der Bearbeitung des Werksütckes sind auf dem Spannkopf zur Werkstückvermessung vorzugsweise einziehbare Meßtaster eingebaut, die ebenso wie ein Werkzeug selbst in verschiedenste Meßpositionen verdreht und verschwenkt werden können. Es ist zweckmäßig wenn die Meßtaster, insbesondere deren Taststifte austauschbar ausgebildet sind, so daß die Abtastung einer Formgebung bei der Bearbeitung angepaßt werden kann. Schließlich ist es vorteilhaft, wenn der Antrieb für die rotierenden Werkzeuge im Schwenkteil eingebaut oder auf diesen aufgebaut ist.

Ausführungsbeispiele des Erfindungsgegenstandes sind in den Zeichnungen dargestellt.

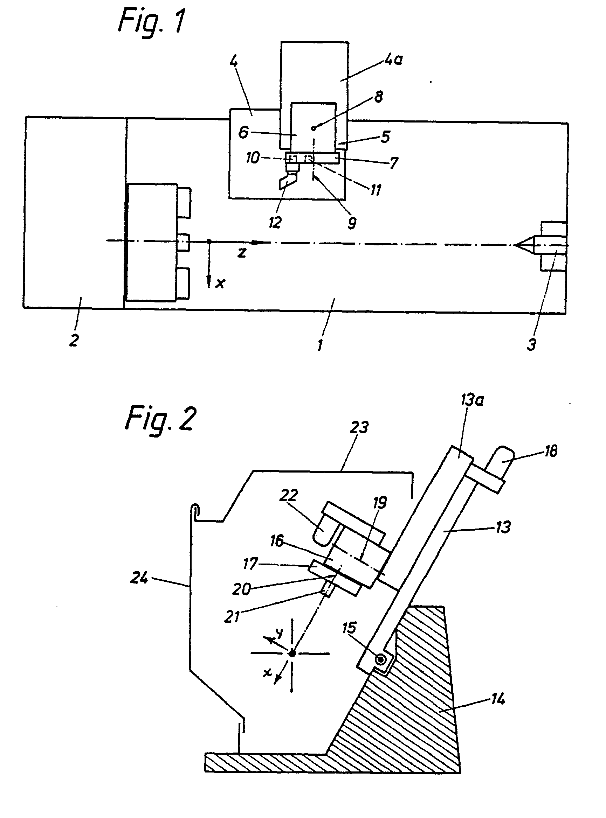

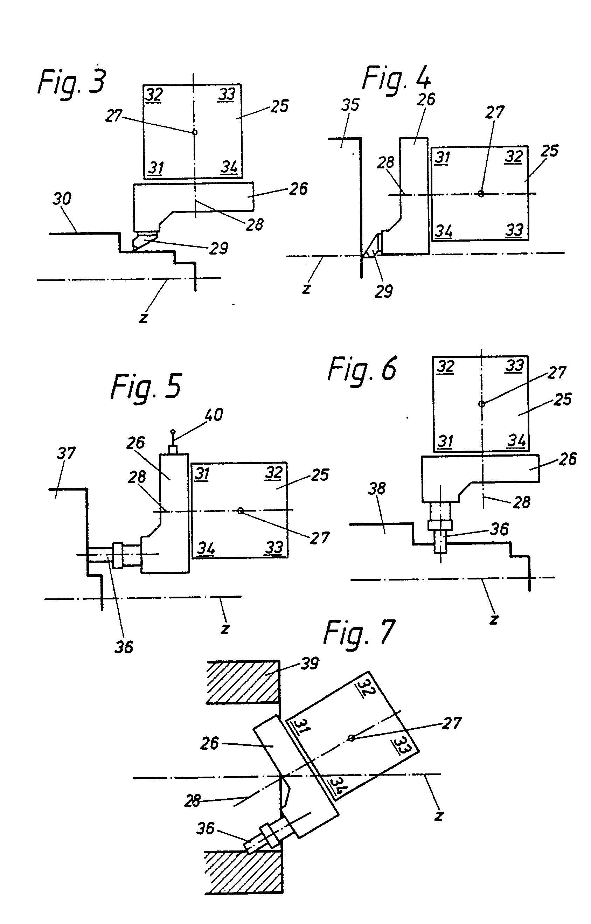

Fig. 1 zeigt einen Grundriß einer Werkzeugmaschine in vereinfachter, schematischer Darstellung, Fig. 2 einen Querschnitt durch eine Werkzeugmaschine anderer Bauart und die Fig. 3 bis 7 einen Werkzeugträger bei verschiedenen Bearbeitungsfällen.

Eine Werkzeugmaschine gemäß Fig. 1 umfaßt auf einem Maschinenbett 1 einen Spindelstock 2, einen Reitstock 3, einen Bettschlitten 4 und einen Planschieber 4a. Es sind ferner die Achsenrichtungen z für die Maschinenlängsachse und x für die Planrichtung eingezeichnet. Der Bettschlitten 4 ist in z-Richtung und der Planschieber 4a mit dem darauf angeordneten Werkzeugträger 5 in x-Richtung verfahrbar. Die Antriebe für die Bewegungsabläufe werden wie bekannt elektronisch programmgesteuert und die Positionen meßtechnisch erfaßt und korrigiert.

Der Werkzeugträger 5 ist zweiteilig ausgebildet und besteht aus einem Schwenkteil 6 und aus einem beispielsweise scheibenförmigen Spannkopf 7. Der Schwenkteil 6 ist um eine Achse 8, die in Fig. 1 der y-Richtung der Maschine entspricht und im Werkzeugmaschinenbau als B-Achse bezeichnet wird, gegenüber dem Planschieber 4 schwenkbar. Der Spannkopf 7 ist seinerseits um eine Achse 9 gegenüber dem Schwenkteil 6 drehbar. Eine Achse der letztgenannten Art wird im Werkzeugmaschinenbau als A-Achse bezeichnet.

Der Spannkopf 7 verfügt über zwei Werkzeugaufnahmen 10, 11. Eine für ein stationäres Drehwerkzeug 12, die andere für ein rotierend angetriebenes Werkzeug wie z.B. einen Fräser. Die beiden Werkzeugaufnahmen 10, 11 sind bei dem Ausführungsbeispiel um 60° bezogen auf die Achse 9 zueinander versetzt.

In der in Fig. 1 dargestellten Werkzeugposition kann z.B. eine Welle durch Langdrehen bearbeitet werden (siehe auch Fig. 3). Wird nun der Schwenkteil um 90° um die Achse 8 (Achse B) und der Spannkopf um 180° um die Achse 9 (Achse A) gedreht, dann ist ein Plandrehen etwa einer Stirnfläche einer Welle möglich (siehe auch Fig. 4). Einige der sich mit den erfindungsgemäßen Werkzeugträger ergebenden Bearbeitungsmöglichkeiten sind in den Fig. 3 bis 8 dargestellt.

Fig. 2 zeigt einen Querschnitt durch eine Schrägbettmaschine. Ein Bettschlitten 13 ist auf einem Schrägbett 14 in Längsrichtung durch eine Spindel 15 verfahrbar. Der Bettschlitten 13 trägt einen Planschieber 13a, der von dem Motor 18 verstellbar ist. Ein Werkzeugträger bestehend aus Schwenkteil 16 und Spannkopf 17 ist auf dem Planschieber 13a vorgesehen. Der Schwenkteil 16 ist um eine Achse 19 gegenüber dem Planschieber und der Spannkopf 17 ist um eine Achse 20 gegenüber dem Schwenkteil verdrehbar. Der über mindestens zwei Werkzeugaufnahmen verfügende Spannkopf 17 trägt in Fig. 2 ein Werkzeug 21. Der Antrieb 22 für ein rotierendes Werkzeug (Fräser) ist auf den Schwenkteil aufgesetzt. Die Maschine nach Fig. 2 ist durch Wände 23 mit Schiebetüren 24 gegenüber der Umgebung abgeschlossen.

In den Fig. 3 bis 7 ist ein aus Schwenkteil 25 und Spannkopf 26 bestehender Werkzeugträger in verschiedenen Arbeitspositionen dargestellt. Damit man die Schwenkbewegungen um die Achsen 27 und 28 zwischen den Arbeitspositionen besser erfassen kann, sind die Ecken des Schwenkteiles mit den Bezugszeichen 31, 32, 33, 34 markiert.

Fig. 3 zeigt eine Wellenbearbeitung durch Langdrehen. Ein Drehstahl 29 ist in der Werkzeugaufnahme für Drehwerkzeuge eingesetzt und bearbeitet ein um die Maschinenlängsachse z rotierendes Werkstück 30. Die Aufnahme für rotierend antreibbare Werkzeug ist in Fig. 3 unbesetzt und abgedeckt, so daß keine Verunreinigung durch Späne od.dgl. erfolgen kann.

Fig. 4 zeigt des plandrehen eines im Futter eingespannten Werkstückes 35. Der Schwenkteil 25 wurde um 90° und der Spannkopf 26 und 180° gedreht.

In Fig. 5 befindet sich der Schwenkteil in der selben Position wie in Fig. 4, jedoch ist die Werkzeugaufnahme für rotierende Werkzeuge mit einem Fräser 36 besetzt. Um den Fräser 36 in die Bearbeitungsebene zu bringen wurde der Spannkopf um 60° verdreht, dieser Winkel ist auf den Spannkopf zwischen den beiden Werkzeugaufnahmen vorgesehen. Das Werkstück 37 wird in z- oder x-Richtung bearbeitet.

In Fig. 6 ist eine Rückdrehung des Schwenkteiles 25 um 90° und des Spannkopfes um 180° erfolgt. Das Werkstück 38 wird vom Fräser 36 in x- oder z-Richtung bearbeitet. Eine Drehung um die Achse 27 ist während der Bearbeitung möglich.

Dadurch kann beispielsweise eine kreisförmig verlaufende Nut hergestellt werden. Durch eine Verdrehung des Spannkopfes um seine Achse können Bearbeitungen außerhalb der x-/z-Ebene durchgeführt werden.

Durch Verdrehung um einen kleinen Betrag kann z.B. eine Nut—mit hoher Genauigkeit der Nutbreite—mit Standardfräsern hergestellt werden.

Weiters kann in der Bearbeitungsposition gemäß Fig. 6 durch Drehung des Spannkopfes um seine Achse und gleichzeitiger Korrektur der z-Position eine senkrecht zur x-/z-Ebene liegende Nut in y-Richtung hergestellt werden.

Fig. 7 zeigt eine Innenbearbeitung mit schrägverlaufender Werkzeugachse an einem rohrförmigen Werkstück 39. Der Schwenkteil 25 wurde gegenüber Fig. 5 etwas verdreht. In gleicher Weise kann auch an einer Außenfläche eines Werkstückes eine schrägliegende Bohrung angebracht werden.

Fig. 5 zeigt ferner noch einen Fühler 40, der ebenso wie die Werkzeuge 29 und 36 in jede Meßposition gegenüber dem Werkstück 30, 35, 37, 39 gebracht werden kann, da er infolge der Montage auf dem Spannkopf 26 um die Achsen 27 und 28 schwenkbar ist.

Die in Zusammenhang mit der Beschreibung der Fig. 3 bis 7 genannten Verdrehbewegungen des Schwenkteiles 25 und des Spannkopfes 26 vor oder auch während eine Bearbeitungsvorganges erfolgen ebenso wie ein Anfahren einer Arbeitsposition oder einer Wechselposition durch programmgesteuerte Stellmotoren.

**Patentansprüche**

1. Werkzeugmaschine mit einem Werkzeugträger, der einen schwenkteil (6) und einen Spannkopf (7) umfaßt und der um zwei Achsen auf einem Scheiber, beispielsweise einem Planschieber (4a), drehbar ist, wobei die Achsen vorzugsweise in einem rechten Winkel zueinander stehen und die eine Achse (A-Achse) parallel zur Planvorschubrichtung (x) und die andere Achse (B-Achse) in der normal dauz stehenden y-Richtung (8, 19, 29) ausgerichtet sind, dadurch gekennzeichnet, daß Mittel zur programmierbaren Steuerung der Drehlage des Werkzeugträgers (5) während der Bearbeitung um eine oder beide Achsen (8, 19, 27; 9, 20, 28), zusätzlich zu einem Längs- und bzw. oder Planvorschub zwecks Bearbeitung eines Werkstückes in der auf die Längs(z)- und Plan(x)-Richtung normal stehenden y-Richtung und/oder schräg dazu vorgesehen sind.

2. Werkzeugmaschine nach Anspruch 1, dadurch gekennzeichnet, daß mindestens zwei Werkzeugaufnahmen (19, 11) vorgesehen sind, wobei die eine für stationäre Drehwerkzeuge (12, 21, 29) und die andere für rotierend angetriebene Werkzeuge (36) ausgebildet ist.

3. Werkzeugmaschine nach den Ansprüchen 1 oder 2, dadurch gekennzeichnet, daß zum Verschwenken des Werkzeugträgers (5) in eine Position außerhalb der Maschinenlängs- (z)- oder Planachse (x) eine digitale Positioniereinrichtung mit Indexierung z.B. über Planverzahnung vorgesehen ist.

4. Werkzeugmaschine nach den Ansprüchen 1 oder 2, dadurch gekennzeichnet, daß zum Verschwenken eine stufenlose Interpoliereinrichtung vorgesehen ist.

**Revendications**

1. Machine-outil avec un porte-outil comprenant une partie pivotante (6) et une tête de serrage (7), monté en rotation autour de deux axes sur un coulisseau, par exemple un coulisseau transversal (4a), ces axes formant de préférence entre eux un angle droit, l'un des axes (axe A) étant orienté en position parallèle au sens d'avance transversale (x) et l'autre axe (axe B) étant en position normale par rapport au sens y (8, 19, 29), caractérisée par le fait qu'il est prévu des moyens de commande programmables de la position de travail du porte-outil (5) pendant l'usinage autour d'un des deux axes (8, 19; 27; 9, 20, 23) en addition à une avance longitudinale et resp. ou transversale dans le but d'usiner une pièce dans le sens y en position normale et/ou oblique par rapport au sens longitudinal (z) et transversal (x).

2. Machine-outil selon la revendication 1, caractérisée par le fait qu'il est prévu au moins deux récepteurs d'outil (19, 11), l'un étant conçu pour des outils stationnaires de chariotage (12, 21, 29) et l'autre pour des outils entraînés en rotation (36).

3. Machine-outil selon les ervendications 1 ou 2, caractérisée par le fait que pour pivoter le porte-outil (5) en une position située en dehors de l'axe longitudinal (z) ou transversal (x) de la machine, il est prévu un dispositif numérique de positionnement avec indexation, p.ex. sur denture transversale.

4. Machine-outil selon les revendications 1 ou 2, caractérisée par le fait que pour le pivotement, il est prévu un dispositif d'interpolation à réglage continu.

**Claims**

1. A machine tool with a tool carrier of the kind which comprises a swivel part (6) and a clamping chuck (7), said tool carrier slewing upon two axes on a slide, for instance a radial facing slide (4a), said axes being arranged preferably at right angles to each other, and one axis (A axis) parallel to the crossfeed direction (x), and the other axis (B axis) parallel to the y direction (8, 19, 29) being perpendicular to said A axis, characterized in that means are provided for programmable control of the slew position of said tool carrier (5) during machining upon one or both of said axs (8, 19, 27, 9, 20, 28) in addition to a longitudinal feed and/or crossfeed for the purpose of machining a work piece along said y direction being perpendicular to the longitudinal feed (z) and the crossfeed (x) direction and/or angular to it.

2. A machine tool according to Claim 1, characterized in that at least two tool holding fixtures (19, 11) are provided, one being suitable for accommodation of stationary turning tools (12, 21, 29), the other for rotary driven tools (36).

3. A machine tool according to Claim 1 or 2, characterized in that a digital positioning device with indexing function, e.g. by means of a crown gear, is provided for slewing the tool carrier (5) to a position outside the longitudinal axis (z) or the cross axis (x) of the machine.

4. A machine tool according to Claim 1 or 2, characterized in that a continuous interpolation unit is provided for slewing.

## Fig. 1

## Fig. 2

1

*Fig. 3*

*Fig. 4*

*Fig. 5*

*Fig. 6*

*Fig. 7*